# EUROPÄISCHE PATENTSCHRIFT

(11) **EP 1 502 998 B1**
(45) Veröffentlichungstag und Bekanntmachung des Hinweises auf die Patenterteilung: **12.08.2009**
(21) Anmeldenummer: 04013821.6
(22) Anmeldetag: 11.06.2004
(51) Int. Cl.: E01C 11/22, E03F 3/04

(54) **Entwässerungselement und Verwendung eines Entwässerungselements**
Draining element and use of a draining element
Elément de drainage et application d'un élément de drainage

(30) Priorität: 31.07.2003 DE 10335505
(43) Veröffentlichungstag der Anmeldung: 02.02.2005
(60) Teilanmeldung: 09004692.1
(73) Patentinhaber: MEA Meisinger AG, 86551 Aichach (DE)
(72) Erfinder: Zeiselmair, Wolfgamg, 86529 Schrobenhausen (DE)
(74) Vertreter: Wolff, Felix

(56) Entgegenhaltungen:
- DE-A1- 10 258 675
- DE-U1- 9 005 811
- DE-U1- 9 219 225
- FR-A- 2 738 021
- US-A- 4 838 727

## Beschreibung

Die Erfindung betrifft ein Entwässerungselement nach dem Oberbegriff des Anspruchs 1 insbesondere für Parkhäuser oder dergleichen.

Es sind aus der FR 2 738 021 bereits Entwässerungselemente zum Sammeln und zur Drainage für begehbare Böden bekannt, wobei solche Entwässerungselemente auf einer Oberseite eine Mehrzahl von Stegen und eine Mehrzahl von Rillen aufweisen. Solche bekannten Entwässerungselemente weisen allerdings Nachteile derart auf, dass ihre Brauchbarkeit zur Verwendung in Parkhäusern stark herabgesetzt wird. Beispielsweise eignen sich die bekannten Entwässerungselemente insbesondere nicht in ausreichendem Umfang zur Benutzung sowohl durch Fußgänger als auch durch Fahrzeuge - seien es muskelbetriebene Fahrzeuge wie beispielsweise Fahrräder oder motorgetriebene Kraftfahrzeuge wie beispielsweise PKW. Weiterhin weisen die bekannten Entwässerungselemente Nachteile hinsichtlich ihrer Stabilität und ihrer Dichte auf, so dass ihre Verwendung in Hochbauten, insbesondere in Parkhäusern, stark herabgesetzt ist.

Es ist ferner aus der US 4838727 A ein Entwässerungselement aus Polymerbeton bekannt, dessen Wasserableitungseigenschaften jedoch nachteilig sind.

Der Erfindung liegt daher die Aufgabe zugrunde, ein Entwässerungselement zu schaffen, das die Nachteile des Standes der Technik vermeidet.

Diese Aufgabe wird erfindungsgemäß durch ein Entwässerungselement gemäß dem Hauptanspruch gelöst. Durch die Kombination einer Polymerkomponente mit einer mineralischen Komponente sowie einer erfindungsgemäßen Rillen- bzw. Stegstruktur ist es erfindungsgemäß überraschend möglich, ein gegenüber dem Stand der Technik deutlich verbessertes Entwässerungselement zu schaffen, mit dem sämtliche Anforderungen an eine Verwendung des Entwässerungselements in einem Parkhaus erreichbar sind. Bevorzugt ist es erfindungsgemäß vorgesehen, dass die mineralische Komponente von der Polymerkomponente gebunden vorgesehen ist. Insbesondere durch eine solche Verbindung im Sinne einer Mischung der Polymerkomponente mit der mineralischen Komponente bzw. der Mineralkomponente - beispielsweise Sand, insbesondere Sand einer Kömungsgröße von etwa 5 µm bis etwa 5 mm bzw. Sand einer bestimmten Verteilung der Kömungsgröße - ist es erfindungsgemäß möglich die geforderten Stabilitätseigenschaften bei gleichzeitig reduziertem Gewicht bei gleichzeitig kostengünstiger Herstellungsweise zu erreichen. Es ist hierbei insbesondere vorgesehen, dass die Mischung der beiden Komponenten als Einbettung der Mineralkomponente bzw. der mineralischen Komponente in die Polymerkomponente ausgeführt vorgesehen ist. Besonders eignet sich erfindungsgemäß die Verwendung einer Polymerkomponente auf Polyesterharzbasis bzw. auf Vinylesterharzbasis.

Bei einer besonders bevorzugten Ausführungsform der Erfindung umfasst das Entwässerungselement Polymerbeton. Hierbei ist es erfindungsgemäß vorteilhaft möglich, die bewährten Eigenschaften von Polymerbeton zu nutzen und insbesondere ein kostengünstig herstellbares Entwässerungselement bereitzustellen. Insbesondere ist es dadurch erfindungsgemäß möglich, das Entwässerungselement vollständig klapperfrei (insbesondere bei einer Überfahrung durch ein Fahrzeug) zu gestalten. Dies verbessert den Gebrauch des Entwässerungselements insbesondere in stark schallenden Gebäuden, wie beispielsweise Parkhäusern oder Tiefgaragen, besonders stark. In besonders vorteilhafter Weise ergeben sich dabei hohe Festigkeitswerte bei gleichzeitig geringem Gewicht. Erfindungsgemäß lassen sich dadurch Druckfestigkeiten von über etwa 50 N/mm², bevorzugt von über etwa 90 N/mm² und ganz besonders bevorzugt von über etwa 95 N/mm² erreichen. Weiterhin lassen sich dadurch Biegezugfestigkeiten von über etwa 10 N/mm², bevorzugt von über etwa 20 N/mm² und ganz besonders bevorzugt von über etwa 22 N/mm² erreichen. Hierbei sind für das Elastizitätsmodul Werte von ca. 25 kN/mm² bis 35 kN/mm² erreichbar.

Besonders bevorzugt ist eine erfindungsgemäße Ausführungsform, bei der das Entwässerungselement einstückig aus Polymerbeton hergestellt vorgesehen ist. Hierdurch ist es einerseits möglich, das Entwässerungselement besonders kostengünstig herzustellen, weil der Herstellungsprozess aufgrund der Einstückigkeit des Elements einfach durchführbar ist - etwa auch deshalb, weil beim Herstellen, d.h. Gießen, des Entwässerungselements keine Fixierung oder dergleichen von weiteren Bestandteilen des Entwässerungselements durchgeführt werden muss. Andererseits ist es dadurch aufgrund der Abwesenheit irgendwelcher rostanfälliger Einbauteile auch möglich, das Entwässerungselement vollständig gegen Korrosion zu schützen.

Bei einer besonders bevorzugten Ausführungsform der Erfindung ist weiterhin vorgesehen, dass das Entwässerungselement wasserundurchlässig und kapillarfrei vorgesehen ist. Hierdurch ist es erfindungsgemäß möglich, die Wasseraufnahme des Entwässerungselements auf sehr geringe Werte zu beschränken, vorzugsweise unter 2%, besonders bevorzugt unter 1% und ganz besonders bevorzugt unter 0,05%. Weiterhin ist es durch die kapillarfreie Materialstruktur möglich, eine Wassereindringtiefe von praktisch null (0 mm) zu erreichen.

Bei einer bevorzugten Ausführungsform des erfindungsgemäßen Entwässerungselements weisen weiterhin die Rillen Abmessungen derart auf, dass die Rillen, d.h. die Oberseite des Entwässerungselements, begehbar und befahrbarinsbesondere mittels eines Fahrrades und/oder eines Rollstuhls und/oder eines Kraftfahrzeugs - insbesondere eines PKWs bzw eines LKWs bzw. eines (Gabel-) Staplers - befahrbar - vorgesehen sind. Hierdurch ergeben sich weitreichende Vorteile hinsichtlich der Verwendbarkeit des Entwässerungselements für Hochbauzwecke, insbesondere in einem Parkhaus. Insbesondere ist es dadurch möglich, dass die Schlitzweiten, d.h. die Abmessungen der Rillen der Norm EN 1433 entsprechen und damit fußgänger- rollstuhl- und fahrradfreundlich ausgelegt sind. Es ist damit erfindungsgemäß weiterhin möglich, dass sämtliche Bewegungsarten von Benutzern des Entwässerungselements als Bodenbelag verschleißarm und damit dauerhaft möglich sind. Dies führt zu einer kostengünstigen Verwendbarkeit des erfindungsgemäßen Entwässerungselements insbesondere für die angegebenen Zwecke. Hierbei ist erfindungsgemäß sowohl eine Längs- als auch eine Querbefahrung der Rillen durch Fahrzeuge möglich. Weiterhin ist eine Befahrung in einem beliebigen Winkel möglich.

Es ist erfindungsgemäß in einer bevorzugten Ausführungsform weiterhin vorgesehen, dass die Stege als Teil der Oberseite Oberflächen derart aufweisen, dass die Oberflächen der Stege in einer gemeinsamen Ebene vorgesehen sind. Hierdurch ist es möglich, dass das Entwässerungselement gut begehbar und befahrbar ist. Weiterhin ist es dadurch möglich, dass eine Begehung bzw. Befahrung des Entwässerungselementes nicht durch in den Rillen des Entwässerungselementes ablaufendes Wasser behindert wird. Das Entwässerungselement ist daher als Wasserablauf- wie auch als Verdunstungsrinne nutzbar. Da das Entwässerungselement keine Abdeckung der als "Ablaufrinne" genutzten Rillen aufweist, ist eine komfortable Reinigung ohne Behinderung durch eine "Rinnenabdeckung" möglich.

Erfindungsgemäß ist es weiterhin bevorzugt vorgesehen, dass die Dichte des Entwässerungselements kleiner als etwa 5 kg/dm³ vorgesehen ist, bevorzugt kleiner als etwa 4 kg/dm³, besonders bevorzugt kleiner als etwa 3 kg/dm³ und ganz besonders bevorzugt etwa 2,25 kg/dm³. Dadurch ist es erfindungsgemäß möglich, ein besonders leichtes Entwässerungselement zu schaffen.

Ein weiterer Gegenstand der vorliegenden Erfindung ist eine Verwendung eines erfindungsgemäßen Entwässerungselements in einem Parkhaus und/oder an bzw. auf einem Balkon und/oder in bzw. an Fertigungshallen. Besonders bevorzugt ist die gleichzeitige oder alternative Verwendung des Entwässerungselements als Taststein für Sehbehinderte. Hierdurch wird es erfindungsgemäß vorteilhaft möglich, sämtliche Eigenschaften des Entwässerungselements in vorteilhafter Weise einzusetzen.

Die Erfindung wird nachfolgend anhand von in der Zeichnung dargestellten Ausführungsbeispielen näher erläutert.
- **Figur 1**: zeigt ein erfindungsgemäßes Entwässerungselement in perspektivischer Darstellung.
- **Figur 2**: zeigt eine Anwendungssituation einer Mehrzahl von erfindungsgemäßen Entwässerungselemente in einem Parkhaus.
- **Figur 3**: zeigt eine Draufsicht und zwei Seitenansichten des erfindungsgemäßen Entwässerungselements.
- **Figur 4**: zeigt in einer vergrößerten Detaildarstellung eine der in **Figur 3** dargestellten Seitenansichten des erfindungsgemäßen Entwässerungselements.
- **Figur 5**: zeigt eine gegenüber **Figur 4** weiter vergrößerte und perspektivische Darstellung der Seitenansicht des erfindungsgemäßen Entwässerungselements.

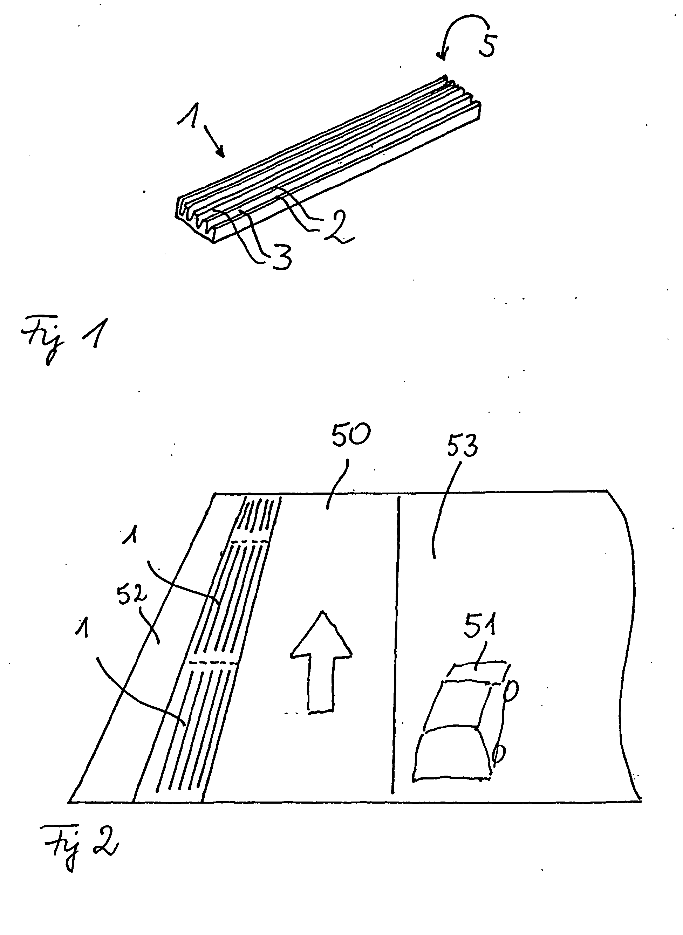

In **Figur 1** ist das erfindungsgemäße Entwässerungselement 1 in perspektivischer Darstellung mit einer Mehrzahl von Rillen 3 und einer Mehrzahl von Stegen 2 dargestellt. Das Entwässerungselement 1 weist eine Oberseite 5 auf.

In **Figur 2** ist eine Anwendungssituation von Entwässerungselementen 1 dargestellt, die an ihrer Stirnseite aneinander anliegend fortlaufend angeordnet sind, um einen Weg 50 bzw. eine Fahrbahn 50 seitlich gegenüber einem Seitenbereich 52 zu begrenzen. Hierbei dient das Entwässerungselement 1 gleichzeitig der Ableitung von Regenwasser oder sonstigem Wasser, das beispielsweise von Fahrzeugen 51 in das Parkhaus eingebracht wird. Die Rillen 3 und Stege 2 des Entwässerungselements 1 sind in **Figur 2** der Einfachheit halber nicht in aller Deutlichkeit dargestellt. Erfindungsgemäß ist es durchaus ebenfalls vorgesehen - in **Figur 2** jedoch nicht dargestellt - die Begrenzung zwischen dem Weg 50 und einem Parkbereich 53 ebenfalls mittels der erfindungsgemäßen Entwässerungselemente 1 auszuführen.

Erfindungsgemäß ist es vorgesehen, dass das Entwässerungselement 1 dadurch als Taststein für Sehbehinderte wirkt, dass ein beispielsweise über einen Stock verfügender Sehbehinderter die unterschiedliche Oberflächenbeschaffenheit zwischen der von den Rillen 3 und den Stegen 2 bestimmten Oberfläche bzw. Oberseite 5 des Entwässerungselements 1 und der angrenzenden Oberfläche des Weges 50 wahrnimmt und somit den Weg 50 vom Randbereich des Weges 50 (= das Entwässerungselement 1) zu unterscheiden vermag.

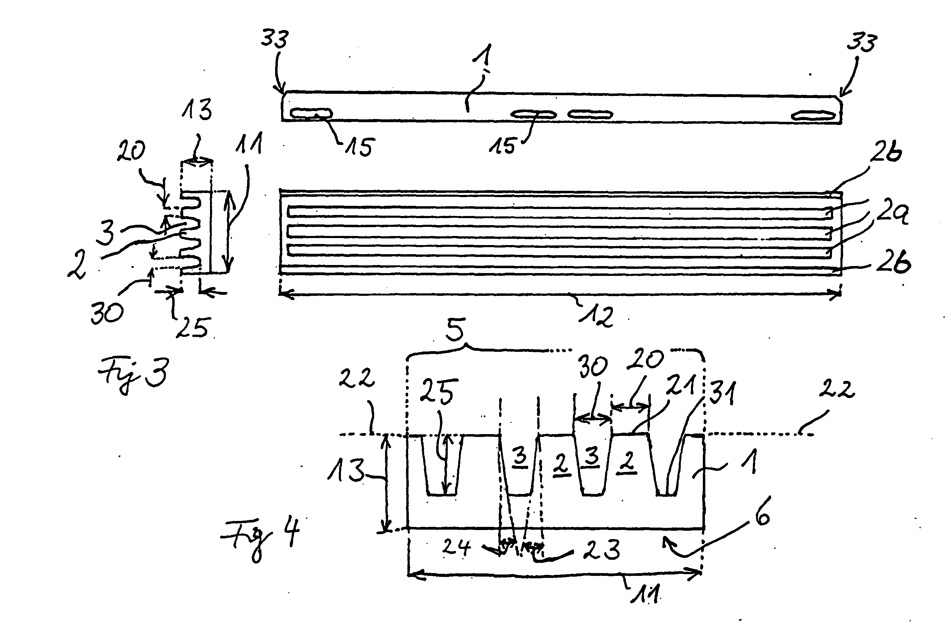

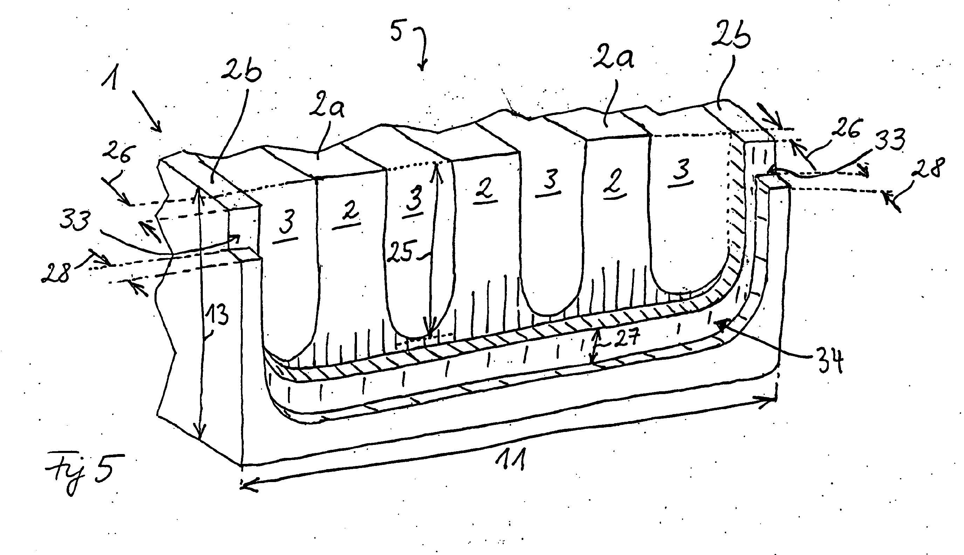

In **Figur 3** ist eine Draufsicht und zwei Seitenansichten des Entwässerungselements 1 dargestellt und **Figur 4** zeigt eine vergrößerte Darstellung einer der Seitenansichten aus **Figur 3**. Figur 5 zeigt eine gegenüber Figur 4 weiter vergrößerte und perspektivische Darstellung der Seitenansicht des erfindungsgemäßen Entwässerungselements. Die **Figuren 3, 4** **und** **5** werden im folgenden gemeinsam beschrieben.

Das Entwässerungselement 1 weist eine Länge 12, eine Breite 11 und eine Gesamttiefe 13 auf, wobei die Länge 12 erfindungsgemäß insbesondere größer vorgesehen ist als die Breite 11 und diese wiederum größer als die Gesamttiefe 13 vorgesehen ist. Die Seite der Breite 11 wird auch als die Stirnseite des Entwässerungselements 1 bezeichnet. Das Entwässerungselement 1 weist außer der Oberseite 5 eine Unterseite 6 auf. Die Oberseite 5 wird im wesentlichen durch die Oberflächen 21 der Stege 2 und durch die Oberfläche 31 der Rillen 3 gebildet. Hierbei sind die Oberflächen 21 der Stege 2 erfindungsgemäß in einer gemeinsamen Ebene 22 angeordnet, die bewirkt, dass das Entwässerungselement 1 quasi "ebenerdig", d.h. bei entsprechender Anordnung auf gleichem Niveau wie beispielsweise ein benachbart vorgesehener Weg 50, befahrbar und begehbar ist. Die Mehrzahl von Stegen 2 und die Mehrzahl von Rillen 3 - in den Figuren weist das Entwässerungselement 1 beispielhaft durchgehend vier Rillen 3 und entsprechend drei innere Stege 2a und zwei äußere Stege 2b auf - sind in den Figuren beispielhaft längserstreckt vorgesehen, was jedoch nicht zwingend der Fall ist. Sie können erfindungsgemäß ggf. auch quererstreckt oder anders orientiert - beispielsweise schräg - vorgesehen sein. Sowohl die Stege 2 als auch die Rillen 3 weisen als Abmessungen eine Länge auf, die etwa der Länge 12 des Entwässerungselements 1 entspricht. Dies gilt vor allem für die Länge der äußeren Stege 2b. Die Länge der inneren Stege 2a ist an beiden Stirnflächen des Entwässerungselements 1 um eine Verminderungsstrecke 26 und zusätzlich eine Ausnehmungstiefe 27 (s.u.) verringert vorgesehen, so dass abfließendem Wasser an dieser Stelle die Gelegenheit gegeben wird, von einer Rille 3 in eine andere Rille 3 zu gelangen. An der Stirnseite des Entwässerungselements 1 weisen die äußeren Stege 2 in einer bevorzugten Ausführungsform der Erfindung an ihrem oberen Ende - d.h. an ihrem der gemeinsamen Ebene 22 am nächsten liegenden Ende - eine Anfasung 33 auf. Diese Anfasung 33 erstreckt sich erfindungsgemäß insbesondere zusammen mit einer speziellen Ausnehmung 34 über die gesamte Breite 11 des Entwässerungselements 1. Die spezielle Ausnehmung 34 weist dabei als Abmessungen eine Ausnehmungstiefe 27 und eine Ausnehmungsbreite 28 auf. Bei zwei an ihren Stirnseiten aneinander anstoßenden Entwässerungselementen 1 bilden die beiden an der Stoßfuge aneinander anstoßenden Ausnehmungen 34 die Möglichkeit, die Stoßfuge mittels eines Dichtungsmittels - beispielsweise in Form eines Silikonmaterials - abzudichten. Dies hat den Vorteil, dass abfließendes Wasser nicht in der Stoßfuge zwischen zwei Entwässerungselementen 1 versickern kann. Der Bereich der Abdichtung durch in die Ausnehmung 34 verfülltes Dichtungsmaterial erstreckt sich dabei über den mittleren (und größten) Teil der Breite 11 des Entwässerungselements 1 waagerecht, d.h. parallel zur Unterseite 6 des Entwässerungselements 1, und der Bereich der Abdichtung verläuft im Bereicht der zusammenstoßenden äußeren Stegen 2b zunächst gekrümmt und anschließend senkrecht bis er den Bereich der Anfasung 33 erreicht ist. Bei seitlich nebeneinander angeordneten Entwässerungselementen 1 kann der Bereich der Abdichtung auch kontinuierlich fortgesetzt über mehrere Entwässerungselemente 1 weitergeführt sein und damit eine vollständige Abdichtung auch einer Vielzahl von Entwässerungselementen 1 erlauben. Weiterhin weisen die Stege 2 als weitere Abmessung eine Stegbreite 20 auf und die Rillen 3 weisen als weitere Abmessung eine Rillenbreite 30 auf. Weiterhin weisen die Rillen 3 (bzw. die Stege 2) als weitere Abmessung eine Tiefe 25 (bzw. eine Höhe) auf. Weitere Hinterschneidungselemente 15 sind seitlich am Entwässerungselement 1 angeordnet. Die Hinterschneidungselemente 15 sind als hinterschneidende seitliche Ausnehmungen im Material des Entwässerungselements 1 vorgesehen. In der Praxis können somit die Entwässerungselemente 1 zunächst gesetzt werden und nachfolgend die benachbarten Flächen mittels eines zeitlich später aushärtenden Materials ausgegossen werden. Hierbei fließt das aushärtende Material in die Hinterschneidungselemente 15, so dass die Stabilität der Anordnung und insbesondere die Arretierung der Entwässerungselemente 1 formschlüssig verbessert wird.

Beispielsweise kann bei einer beispielhaften Gesamttiefe 13 von etwa 50 mm die Tiefe 25 etwa 35 mm betragen. Weiterhin kann in diesem Beispiel die Stegbreite 20 und die Rillenbreite 30 - in der gemeinsamten Ebene 22 gemessen - jeweils etwa 18 mm betragen. In einer bevorzugten Ausführungsform kann es dabei - wie auch aus der Zeichnung ersichtlich ist - vorgesehen sein, dass die Stegbreiten der äußeren Stege 2b etwa halb so groß (d.h. im Beispiel etwa 9 mm) wie die Stegbreiten der inneren Stege 2a vorgesehen ist. Dies hat den Vorteil, dass die Entwässerungselemente 1 in einer Richtung quer zur Erstreckung der Stege 2 bzw. Rillen 3 nebeneinander verlegbar sind und die (Rillen-Steg-) Struktur der Oberseite 5 trotzdem weitgehend ununterbrochen fortgesetzt wird. Im Beispiel der sich entlang der Längsseite (d.h. entlang der Länge 12) erstreckenden Stege 2 bzw. Rillen 3 ergibt sich mit einer solchen Dimensionierung der äußeren Stege 2b durch eine Mehrzahl an ihren Längsseiten nebeneinanderliegenden Entwässerungselementen 1 eine weitgehend ununterbrochene und gleichmäßige (Rilen-Steg-) Struktur der Oberseite 5. Es kann weiterhin vorgesehen sein, dass sich die Rillen 3 "nach unten hin", d.h. in Richtung weg von der gemeinsamen Ebene 22, verjüngen, wodurch sich ein trapezförmiger Querschnitt der Stege 2 (und auch der Rillen 3) ergibt. Ein solches Trapez kann mittels zweier Winkel 23, 24 - jeweils zwischen der Seitenwand eines Stegs 2 bzw. einer Rille 3 gegenüber einer Richtung senkrecht auf die gemeinsame Ebene 22 gemessen - definiert werden. In **Figur 4** ist beispielhaft eine annähernd symmetrische Ausgestaltung eines solchen Trapezes dargestellt. Eine unsymmetrische Ausgestaltung, d.h. mit unterschiedlichen Winkeln 23, 24 ist erfindungsgemäß ebenfalls möglich. Selbstverständlich ist es erfindungsgemäß auch möglich, dass die Winkel 23, 24 gleich null vorgesehen sind, d.h. dass die Seitenwände der Stege 2 bzw. der Rillen 3 senkrecht zur gemeinsamen Ebene 22 verlaufen. Die in Figur 5 dargestellte, gegenüber der Figur nochmals vergrößerte Darstellung einer Stirnfläche des Entwässerungselements 1 weist zur besseren Darstellung in Teilbereichen der verschieden orientierten Flächen Schraffierungen auf, die den waagerechten bzw. senkrechten Verlauf der Teilflächen andeuten soll. Eine bestimmte Materialauswahl ist durch die Schraffierung nicht vorgegeben.

### Bezugszeichenliste

- 1: Entwässerungselement
- 2: Stege
- 2a: innere Stege
- 2b: äußere Stege
- 3: Rillen
- 5: Oberseite
- 6: Unterseite
- 11: Breite
- 12: Länge
- 13: Gesamttiefe
- 15: Hinterschneidungselemente
- 20: Stegbreite
- 21: Oberfläche der Stege
- 22: gemeinsame Ebene
- 23, 24: Winkel
- 25: Tiefe bzw. Höhe
- 26: Verminderungsstrecke
- 27: Ausnehmungstiefe
- 28: Ausnehmungsbreite
- 30: Rillenbreite
- 31: Oberfläche der Rillen
- 33: Anfasung
- 34: Ausnehmung
- 50: Weg bzw. Fahrbahn
- 51: Fahrzeug
- 52: Seitenbereich
- 53: Parkbereich

## Patentansprüche

1. Entwässerungselement (1) mit einer Oberseite (5), wobei die Oberseite (5) eine Mehrzahl von Stegen (2) und eine Mehrzahl von Rillen (3) umfasst, wobei das Entwässerungselement zwei äußere Stege (2b) sowie wenigstens einen inneren Steg (2a) aufweist, **dadurch gekennzeichnet, dass** das Entwässerungselement eine Polymerkomponente und eine mineralische Komponente umfasst, wobei die Länge der inneren Stege (2a) gegenüber der Länge der äußeren Stege (2b) um eine Verminderungsstrecke an zwei Stirnflächen des Entwässerungselements verringert vorgesehen ist.

2. Entwässerungselement (1) nach Anspruch 1, **dadurch gekennzeichnet, dass** die mineralische Komponente von der Polymerkomponente gebunden vorgesehen ist.

3. Entwässerungselement (1) nach einem der vorhergehenden Ansprüche, **dadurch gekennzeichnet, dass** das Entwässerungselement (1) Polymerbeton umfasst.

4. Entwässerungselement (1) nach einem der vorhergehenden Ansprüche, **dadurch gekennzeichnet, dass** das Entwässerungselement (1) einstückig aus Polymerbeton hergestellt vorgesehen ist.

5. Entwässerungselement (1) nach einem der vorhergehenden Ansprüche, **dadurch gekennzeichnet, dass** das Entwässerungselement (1) wasserundurchlässig und kapillarfrei vorgesehen ist.

6. Entwässerungselement (1) nach einem der vorhergehenden Ansprüche, **dadurch gekennzeichnet, dass** die Rillen (3) Abmessungen (30) derart aufweisen, dass die Rillen (3) begehbar und befahrbar - insbesondere mittels eines Fahrrades und/oder eines Rollstuhls und/oder eines Kraftfahrzeugs befahrbar - vorgesehen sind

7. Entwässerungselement (1) nach einem der vorhergehenden Ansprüche, **dadurch gekennzeichnet, dass** die Stege (2) als Teil der Oberseite (5) Oberflächen (21) derart aufweisen, das die Oberflächen (21) der Stege (2) in einer gemeinsamen Ebene (22) vorgesehen sind.

8. Entwässerungselement (1) nach einem der vorhergehenden Ansprüche, **dadurch gekennzeichnet, dass** die Dichte des Entwässerungselements (1) kleiner als etwa 5 kg/dm³ vorgesehen ist, bevorzugt kleiner als etwa 4 kg/dm³, besonders bevorzugt kleiner als etwa 3 kg/dm³ und ganz besonders bevorzugt etwa 2,25 kg/dm³.

9. Verwendung eines Entwässerungselements (1) nach einem der vorhergehenden Ansprüche in einem Parkhaus und/oder an bzw. auf einem Balkon und/oder in bzw. an Fertigungshallen.

10. Verwendung nach Anspruch 9, **dadurch gekennzeichnet, dass** das Entwässerungselement (1) zusätzlich als Taststein für Sehbehinderte dient.

11. Verwendung eines Entwässerungselements (1) nach einem der Ansprüche 1 bis 8 als Taststein für Sehbehinderte.

## Claims

1. Drainage element (1) having an upper side (5), wherein the upper side (5) comprises a plurality of ribs (2) and a plurality of channels (3), wherein the drainage element has two outer ribs (2b) and at least one inner rib (2a), **characterized in that** the drainage element comprises a polymer component and a mineral component, wherein provision is made for the length of the inner ribs (2a) to be reduced with respect to the length of the outer ribs (2b) by a shortening distance at two end faces of the drainage element.

2. Drainage element (1) according to Claim 1, **characterized in that** provision is made for the mineral component to be bound by the polymer component.

3. Drainage element (1) according to either of the preceding claims, **characterized in that** the drainage element (1) comprises polymer concrete.

4. Drainage element (1) according to one of the preceding claims, **characterized in that** provision is made for the drainage element (1) to be produced in one piece from polymer concrete.

5. Drainage element (1) according to one of the preceding claims, **characterized in that** provision is made for the drainage element (1) to be water-impermeable and capillary-free.

6. Drainage element (1) according to one of the preceding claims**, characterized in that** the channels (3) have dimensions (30) such that provision is made for the channels (3) to be able to be walked over and driven over, in particular driven over by a bicycle and/or a wheelchair and/or a motor vehicle.

7. Drainage element (1) according to one of the preceding claims, **characterized in that** the ribs (2) as part of the upper side (5) have surfaces (21) such that the surfaces (21) of the ribs (2) are provided in a common plane (22).

8. Drainage element (1) according to one of the preceding claims, **characterized in that** provision is made for the density of the drainage element (1) to be less than approximately 5 kg/dm³, preferably less than approximately 4 kg/dm³, particularly preferably less than approximately 3 kg/dm³, and very particularly preferably approximately 2.25 kg/dm³.

9. Use of a drainage element (1) according to one of the preceding claims in a multi-storey car park and/or at or on a balcony and/or in or on production halls.

10. Use according to Claim 9, **characterized in that** the drainage element (1) additionally serves as a tactile block for visually impaired people.

11. Use of a drainage element (1) according to one of Claims 1 to 8 as a tactile block for visually impaired people.

## Revendications

1. Elément de drainage (1) avec un côté supérieur (5), le côté supérieur (5) comprenant une pluralité de nervures (2) et une pluralité de rainures (3), l'élément de drainage présentant deux rainures extérieures (2b) ainsi qu'au moins une rainure intérieure (2a), **caractérisé en ce que** l'élément de drainage comprend un composant polymère et un composant minéral, la longueur de la nervure intérieure (2a) par rapport à la longueur des nervures extérieures (2b) étant réduite d'une distance de réduction au niveau de deux surfaces frontales de l'élément de drainage.

2. Elément de drainage (1) selon la revendication 1, **caractérisé en ce que** le composant minéral est lié au composant polymère.

3. Elément de drainage (1) selon l'une quelconque des revendications précédentes, **caractérisé en ce que** l'élément de drainage (1) comprend du béton polymère.

4. Elément de drainage (1) selon l'une quelconque des revendications précédentes, **caractérisé en ce que** l'élément de drainage (1) est fabriqué d'une seule pièce en béton polymère.

5. Elément de drainage (1) selon l'une quelconque des revendications précédentes, **caractérisé en ce que** l'élément de drainage (1) est imperméable à l'eau et sans capillaire.

6. Elément de drainage (1) selon l'une quelconque des revendications précédentes, **caractérisé en ce que** les rainures (3) présentent des dimensions (30) telles que l'on puisse marcher et rouler sur les rainures (3), notamment au moyen d'une bicyclette et/ou d'un fauteuil roulant et/ou d'un véhicule automobile.

7. Elément de drainage (1) selon l'une quelconque des revendications précédentes, **caractérisé en ce que** les nervures (2), en tant que partie du côté supérieur (5), présentent des surfaces (21) telles que les surfaces (21) des nervures (2) soient prévues dans un plan commun (22).

8. Elément de drainage (1) selon l'une quelconque des revendications précédentes, **caractérisé en ce que** la densité de l'élément de drainage (1) est inférieure à environ 5 kg/dm³, de préférence est inférieure à environ 4 kg/dm³, particulièrement préférablement inférieure à environ 3 kg/dm³ et le plus préférablement d'environ 2,25 kg/dm³.

9. Utilisation de l'élément de drainage (1) selon l'une quelconque des revendications précédentes, dans un parking et/ou sur un balcon et/ou dans des hangars de fabrication.

10. Utilisation selon la revendication 9, **caractérisée en ce que** l'élément de drainage (1) sert en outre de pierre de marquage sensoriel pour les malvoyants.

11. Utilisation de l'élément de drainage (1) selon l'une quelconque des revendications 1 à 8 en tant que pierre de marquage sensoriel pour malvoyants.
